# DEMANDE DE BREVET EUROPEEN

(11) **EP 1 366 695 A1**
(43) Date de publication de la demande: **03.12.2003**
(21) Numéro de dépôt: 03291124.0
(22) Date de dépôt: 14.05.2003
(51) Int. Cl.: A47G 27/04, D06N 7/00

(54) **Ensemble formant moquette comportant une moquette et un dispositif de fixation de la moquette par un systeme a crochets et boucles**

(30) Priorité: 31.05.2002 FR 0206707
(71) Demandeur: Aplix, 75008 Paris (FR)
(72) Inventeur: Hammer, Pavel, 72116 Mössingen/Oschinengen (DE)
(74) Mandataire: Eidelsberg, Olivier

(57) **Abrégé**

Dispositif de fixation d'une moquette sur le sol, constitué d'une nappe (1) en matière plastique d'une face supérieure de laquelle font saillies des crochets (5), destinés à coopérer avec des boucles issues d'une face inférieure de la moquette, en vue de la fixation de celle-ci au sol, une feuille (3) d'un non tissé est fixée à la face inférieure de la nappe (1) en matière plastique.

## Description

La présente invention se rapporte à un ensemble comportant une moquette ou un tapis et un dispositif de fixation de la moquette ou du tapis sur un sol.

On entend par moquette ou tapis un revêtement de sol fonctionnel et à caractère ornemental sous forme notamment d'un tissu étendu à plat sur une surface horizontale, notamment le sol. Il peut s'agir de tapis ou moquettes réalisés à la main ou fabriqués mécaniquement, notamment des tapis ou moquettes à velours, tissés dits Wilton, double pièce, Axminster, chenille, etc.. ou non tissés, dits tuftés ou touffetés, brodés, tricotés, nappés, floqués, à points noués mécaniquement, etc.. ou encore des tapis ou moquettes sans velours, ayant l'apparence d'une très grosse toile. En général, une moquette est fixée sur toute la surface du sol d'une pièce délimitée par les murs de la pièce.

Pour fixer une moquette ou un tapis sur le sol, il existe un premier système qui consiste simplement en une couche de colle à l'interface du sol et de la moquette. Ce système présente l'inconvénient d'une part, que la moquette est difficile à enlever lorsque l'on veut la changer, le nettoyage du sol prenant beaucoup de temps. Il n'est pas possible, une fois que la moquette a été mise en position et que la colle a séché de modifier sa position si par hasard elle n'a pas été mise dans la position exacte souhaitée.

Pour remédier à cet inconvénient, on a déjà pensé à réaliser des surfaces agrippantes constituées d'une nappe en matière plastique de laquelle font saillies des crochets (on entend dans la présente demande par crochet tout type de dispositif d'accrochage tel que des crochets, des harpons ou des champignons, etc., capable de s'accrocher dans des boucles en vue d'une fixation mutuelle par accrochage) qui, en coopération avec un tricot à boucle, ou une couche de fibres non tissée à boucle, laminé sur le dos de la moquette, assurent le maintien de la moquette, avec cependant maintenant possibilité de pouvoir changer facilement soit de moquette, soit de position de la moquette. En général, ces surfaces agrippantes constituées d'une nappe, comportent, sur leur envers, une couche auto-adhésive protégée d'un papier protecteur à retirer avant de coller l'envers de la surface agrippante sur le sol. Dans d'autres cas, on colle directement la surface agrippante par son côté qui ne comporte pas de crochets sur le sol.

Ce système, qui résout effectivement le problème du caractère irréversible de la pose de la moquette présente cependant plusieurs inconvénients. Tout d'abord, l'utilisation de l'enduction auto-adhésive impose un sol très propre et débarrassé de toute poussière, ce qu'il est souvent difficile d'obtenir dans les conditions de travail d'un chantier. En outre, en général la nappe en matière plastique, souvent à base de polypropylène, se colle difficilement directement au sol, ce qui nécessite d'avoir recours à des colles très coûteuses.

Enfin, la surface ou nappe agrippante en matière plastique dont sont issus les crochets forme avec ceux-ci un ensemble assez rigide, notamment lorsqu'elle est sous forme d'un ruban faisant de 30 à 50 cm de large et parfois jusqu'à 1 mètre, ce qui ne permet pas de bien épouser les inégalités du sol, rendant plus difficile le collage des surfaces auto-agrippantes sur le sol et la fixation de la moquette comportant des boucles sur sa face inférieure sur la nappe auto-agrippante intermédiaire au niveau de ces inégalités, par exemple des légères crêtes ou creux dans le sol.

La présente invention vise à surmonter ces inconvénients par un ensemble formant moquette comportant une moquette et un dispositif de fixation de la moquette au sol, constitué d'une nappe en matière plastique de laquelle font saillie des crochets, qui est plus facile à coller sur le sol, et notamment nécessite un sol moins propre et des colles moins onéreuses que dans le cas des ensembles de l'art antérieur. En outre, suivant l'invention on obtient également un ensemble formant moquette ayant un dispositif de fixation de la moquette sur un sol qui, lorsqu'on le pose sur le sol, absorbe mieux les aspérités et les inégalités du sol et en épouse mieux la forme.

Suivant l'invention, l'ensemble formant moquette comportant une moquette et un dispositif de fixation de la moquette sur le sol, constitué d'une nappe en matière plastique d'une face supérieure d'une base de laquelle font saillies des crochets, destinés à coopérer avec des boucles issues d'une face inférieure de la moquette, en vue de la fixation de celle-ci au sol, est caractérisé en ce qu'une feuille d'un non tissé est fixée à la face inférieure de la nappe en matière plastique et les crochets font saillie de la face supérieure de la base de la nappe d'une hauteur comprise entre 0,2 mm et 3 mm, de préférence entre 0,35 mm et 0,9 mm.

La feuille de non tissé permet ainsi un collage aisé sur le sol avec des colles disponibles dans le commerce à des coûts faibles et telles qu'utilisées actuellement par les professionnels lorsqu'ils collent directement la moquette au sol. L'épaisseur relative du non tissé permet d'absorber des aspérités tandis que la relative extensibilité du non tissé permet de compenser les inégalités du sol de sorte qu'il y a moins de vides formés entre la moquette et le sol, par rapport aux systèmes classiques.

De préférence, la feuille de non tissé a une épaisseur comprise entre 10 gr/m² et 150 gr/m², de préférence entre 30 gr/m² et 80 gr/m².

Cette gamme de poids permet d'obtenir un bon compromis entre la capacité d'absorption des contours et la quantité de non tissé utilisé pour la fabrication du dispositif de fixation.

Suivant un mode de réalisation préféré de l'invention, le non tissé est constitué de polyester, polypropylène, polyamide ou fibres naturelles ou de leurs mélanges.

Suivant un perfectionnement de l'invention, la nappe en matière plastique est constituée de bandelettes en matière plastique, munies d'éléments formant crochet et fixées sur la face supérieure du non tissé, en étant à distance les unes des autres, les interstices entre les bandelettes s'étendant dans le sens de la longueur (sens machine) de la feuille de non tissé.

En prévoyant ainsi une nappe en matière plastique comportant des crochets non pas d'une seule pièce mais en plusieurs bandelettes espacées les unes des autres, on obtient une fixation encore meilleure de la moquette qui vient dessus, car ces espacements donnent une certaine souplesse à la nappe en matière plastique comportant des crochets, ce qui permet donc de mieux épouser les différentes aspérités, creux et vallons, qui sont formées au sol et qui n'ont pas encore été parfaitement "amorties" par la feuille de non tissé.

De préférence, la feuille de non tissé a une largeur comprise entre 30 cm et 1,50 m, de préférence entre 50 cm et 1 m.

De préférence, les bandelettes ont une largeur comprise entre 0,5 cm et 5 cm.

De préférence, les interstices ont une largeur comprise entre 0,5 mm et 5 mm, de préférence entre 1 et 3 mm.

Suivant un mode de réalisation préféré, il est fixé, notamment collé, au dos de la moquette un tricot à boucles ou un non tissé à boucles.

A titre d'exemple, on décrit maintenant un mode de réalisation de l'invention, en se reportant au dessin, dans lequel la figure unique représente une surface agrippante suivant l'invention, qui n'est pas à l'échelle.

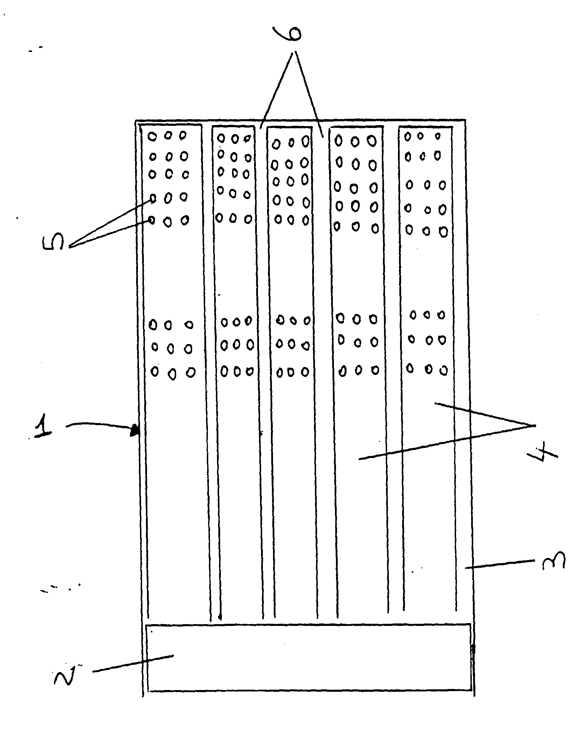

A la figure 1, une surface agrippante 1 est déroulée à partir d'une bobine 2. Elle est constituée d'une part d'une feuille 3 sous-jacente en non tissé ayant une épaisseur de 40 gr/m². La face inférieure de cette feuille de non tissé est destinée à venir se coller sur le sol avec une colle classique peu onéreuse. Sur la face supérieure de cette feuille en non tissé, sont fixées par collage ou soudure ou par tout autre moyen approprié des bandelettes 4 comportant chacune des crochets 5. Les crochets 5 sont directement issus des bandelettes 4 et peuvent être formés notamment par le procédé classique de formation de bandes à crochets décrit dans la demande de brevet français N° 9904331 publiée le 13 Octobre 2000 au nom de la demanderesse et classiquement appelé procédé à lamelle. Un autre procédé notamment le procédé à rouleau de Velcro est également bien évidemment possible. Les bandelettes 4 sont espacées les unes des autres dans le sens de la longueur, c'est-à-dire le sens machine de fabrication du non tissé, par des interstices 6.

Les interstices 6 ont une dimension en largeur de 2 mm. Les bandelettes ont une largeur de 3 cm.

Les crochets ont une hauteur, à partir d'une face supérieure d'une base, qui est comprise entre 0,2 mm et 3 mm, de préférence entre 0,35 mm et 0,9 mm. La base a une épaisseur dans le sens de la hauteur des crochets qui est comprise entre 0,05 mm et 0,4 mm, de préférence entre 0,08 mm et 0,2 mm. Ils sont espacés les uns des autres suivant une densité comprise entre 80/cm² et 280/cm². Les crochets sont répartis de manière uniforme et régulière sur les bandelettes.

La surface 1 agrippante s'utilise de la manière suivante. Après avoir nettoyé rapidement le sol mais pas forcément de manière aussi soigneuse que dans le cas des dispositifs de l'art antérieur, on pose la surface 1 agrippante sur le sol en la collant par une colle classique disponible dans le commerce, par exemple des colles dites acryliques ou acqueuses par dispersion, par exemple de marques Parfax, Bosklik, Sader, Uzin ou Peco que l'on utilise classiquement pour coller de la moquette directement sur le sol. Une fois la surface 1 agrippante collée sur le sol par l'intermédiaire de sa feuille en non tissé, on vient poser la moquette qui comporte sur sa face inférieure des tissus classiques (tricot à boucles ou non tissé à boucles notamment) à boucles qui ont été posés par collage, laminage, soudage, etc., sur le dos de la moquette. Ces tissus à boucle sont classiques dans le domaine des autos-agrippant. Il peut s'agir notamment d'un tricot ou d'un non tissé en polypropylène, en polyamide, en polyester et autres polyoléfine, ou à partir de fibres naturelles, telle que la laine, le cisal, le coco, la jute, le feutre ou leurs mélanges. La moquette est ainsi posée à même le sol et épouse bien les différentes aspérités du sol, telles que les vallons ou les creux, en raison d'une part de la relative souplesse de la feuille non tissée et d'autre part de la souplesse des bandelettes de crochet liée au fait de prévoir des interstices entre elles.

## Revendications

1. Ensemble formant moquette, comportant une moquette et un dispositif de fixation de la moquette sur le sol, constitué d'une nappe (1) en matière plastique d'une face supérieure d'une base de laquelle font saillies des crochets (5), destinés à coopérer avec des boucles issues d'une face inférieure de la moquette, en vue de la fixation de celle-ci au sol, **caractérisé en ce qu'**une feuille (3) d'un non tissé est fixée à la face inférieure de la nappe (1) en matière plastique et les crochets font saillie de la face supérieure de la base de la nappe d'une hauteur comprise entre 0,2 mm et 3 mm, de préférence entre 0,35 mm et 0,9 mm.

2. Ensemble suivant la revendication 1, **caractérisé en ce que** la feuille (3) de non tissé a une épaisseur comprise entre 10gr/m² et 150gr/m², de préférence entre 30gr/m² et 80gr/m².

3. Ensemble suivant la revendication 1 ou 2, **caractérisé en ce que** le non tissé est constitué de polyester, polypropylène, polyamide ou fibre naturelle.

4. Ensemble suivant la revendication 1 ou 2, **caractérisé en ce que** la feuille de non tissé a une largeur comprise entre 30 cm et 1,50 m, de préférence entre 50 cm et 1 m.

5. Ensemble suivant l'une des revendications 1 à 4, **caractérisé en ce que** la nappe en matière plastique est constituée de bandelettes (4) en matière plastique, munies d'éléments (5) formant crochet et fixées sur la face supérieure du non tissé, en étant à distance les unes des autres, les interstices entre les bandelettes s'étendant dans le sens de la longueur (sens machine) de la feuille de non tissé.

6. Ensemble suivant l'une des revendications 1 à 5, **caractérisé en ce que** la nappe en matière plastique est en PP (polypropylène), PE (polyéthylène), LDPE (polyéthylène base densité), HDPE (polyéthylène haute densité), PA (polyamide), PET (polyester) et leurs mélanges et a une épaisseur comprise entre 0,3 mm et 0,8 mm.

7. Ensemble suivant l'une des revendications 5 ou 6, **caractérisé en ce que** les bandelettes ont une largeur comprise entre 0,5 cm et 5 cm.

8. Ensemble suivant l'une des revendications 5 à 7, **caractérisé en ce que** les interstices ont une largeur comprise entre 0,5 mm et 5 mm, de préférence entre 1 et 3 mm.

9. Ensemble suivant l'une des revendications 1 à 8, **caractérisé en ce que** la base a une épaisseur dans le sens de la hauteur des crochets comprise entre 0,05 mm et 0,4 mm, de préférence entre 0,08 mm et 0,2 mm.

10. Ensemble suivant l'une des revendications 1 à 9, **caractérisé en ce qu'**un tricot à boucle ou un non tissé à boucle est fixé au dos de la moquette pour former les boucles devant coopérer avec les crochets.
